# EUROPÄISCHE PATENTANMELDUNG

(11) **EP 0 780 527 A1**
(43) Veröffentlichungstag der Anmeldung: **25.06.1997**
(21) Anmeldenummer: 96119408.1
(22) Anmeldetag: 04.12.1996
(51) Int. Cl.: E04F 15/12

(54) **Estrichkonstruktion mit verkürzter Austrockungszeit und Verfahren zur Herstellung derselben**

(30) Priorität: 23.12.1995 DE 19548546; 23.12.1995 DE 29520479 U
(71) Anmelder: Gebr. Knauf Westdeutsche Gipswerke KG, D-97343 Iphofen (DE)
(72) Erfinder: Knauf, Baldwin, 97346 Iphofen (DE); Seifert, Andres, 97318 Kitzingen (DE)
(74) Vertreter: Werner, Hans-Karsten, Dr.Dipl.-Chem.

(57) **Zusammenfassung**

Die Estrichkonstruktion mit verkürzter Austrocknungszeit weist an ihrer Unterseite eine oder mehrere Schlaufen aus in annähernd gleichem Abstand voneinander verlegten, elektrisch isolierten Heizdrähten auf, welche nur während der Austrocknung mit einer Stromzufuhr verbunden sind. Diese Estrichkonstruktion wird beispielsweise hergestellt durch Verlegen von Heizdrähten als Schlaufen in annähernd gleichem Abstand, dann wird der Estrich aufgebracht, dann die Enden jeder einzelnen Drahtschlaufe mit der Stromzufuhr verbunden und nach der Austrocknung die Stromzufuhr endgültig unterbrochen.

## Beschreibung

Gegenstand der vorliegenden Erfindung ist eine Estrichkonstruktion mit verkürzter Austrocknungszeit sowie Verfahren zur Herstellung derselben.

Estrichkonstruktionen benötigen eine relativ lange Zeit zum Austrocknen ehe sie belegbar sind. In Anbetracht des Wunsches nach kurzen Bauzeiten besteht auch das Bedürfnis, den Zeitraum zwischen Estricheinbau und Belegreife zu verkürzen.
Dabei ist zu beachten, daß mit steigender Estrichdicke die Austrocknungszeit exponentiell steigt. Die Austrocknungszeit kann daher von mehreren Tagen bei großen Estrichdicken auf Monate steigen.

Die DD 41 794 beschreibt eine monolithisch hergestellte Fußbodenplatte aus Estrichmasse, bei der die Estrichmasse zur Beschleunigung des Trockenvorganges durch ein in ihr angeordnetes elektrisches Widerstandsleitersystem erwärmbar ist.
Es wird dort beschrieben, daß ein Stahlbindedraht verwendet wird. Stahlbindedraht führt aber im feuchten Zustand zu Korrosion und letztlich zum Qualitätsabbau des Estrichs.

Die DD 36 475 beschreibt ein Verfahren zum Austrocknen von Estrichen, welches noch weniger für die Praxis geeignet ist, da in ihr nicht-isolierte Drähte im Anstand von mindestens einem Meter verwendet werden sollen, die mit Gleichstrom durchflossen werden. Dabei wird aber ein Strom durch die Estrichmasse fließen, was zu elektrolytischen Zersetzungserscheinungen führt, die sicherlich anschließend zu Stabilitätsverlusten führen.

Die DE-A 34 03 318 beschreibt eine normale Fußbodenheizung, die für den Dauerbetrieb gedacht ist.

Die Aufgabe, die Austrocknungszeit von Estrich einfach, sicher und preiswert zu verkürzen, kann jetzt gelöst werden durch eine Estrichkonstruktion, die dadurch gekennzeichnet ist, daß sie an ihrer Unterseite eine oder mehrere Schlaufen aus in annähernd gleichem Anstand voneinander verlegten, elektrisch isolierten Heizdrähten aufweist, die nur während der Austrocknung mit einer Stromzufuhr verbunden sind.

Vorzugsweise sind die Heizdrähte bezüglich Länge, Drahtdurchmesser und Drahtmaterial so dimensioniert sind, daß sie durch Wechselstrom bis 250 Volt und 50 Herz eine Heizleistung von maximal 25 Watt/m erbringen. Es ist dann ohne weiteres möglich, die Anstände zwischen je zwei Heizdrähten so zu wählen, daß sie im Bereich von 15 bis 25 cm liegen. Vorzugsweise wird ein Anstand von 20 cm gewählt. Heizdrähte unterscheiden sich von üblichen elektrischen Leitungen durch einen relativ hohen Widerstand und dadurch durch eine relativ starke Erwärmung beim Durchfluß von Strom. Als Heizdrähte geeignet sind vor allem Heizdrähte aus mehrfach verdrillten Einzeladern, die aus Metallegierungen bestehen gemäß DIN 57 253 und VDE 0253.

Da einerseits Überhitzungen, auch lokale Überhitzungen vermieden werden müssen, andererseits das Austrocknen bei erhöhten Temperaturen wesentlich rascher erfolgt, wird vorzugsweise eine Konstruktion gewählt, bei der die Heizleistung der Heizdrähte im Bereich von 50 bis 120 W/m² liegt.

Um Spätschäden durch die im Estrich verbleibenden Heizdrähte zu vermeiden, sollten Isolierungen gewählt werden, die alkalibeständig sind. PVC ist diesbezüglich hervorragend geeignet, es können aber prinzipiell auch andere, heute handelsübliche Isolierungen verwendet werden, sofern sie alkalibeständig sind.

Das erfindungsgemäße Verfahren wird durchgeführt, indem auf dem Untergrund für einen Estrich ein oder mehrere Heizdrähte in annähernd gleichem Anstand als Schlaufen verlegt und gegebenenfalls fixiert werden, dann der Estrich aufgebracht wird, dann die Enden jeder einzelnen Drahtschlaufe mit der Stromzufuhr verbunden werden und nach der Austrocknung die Stromzufuhr endgültig unterbrochen wird.

Vorzugsweise werden Heizdrähte verwendet, die bezüglich Länge, Durchmesser und Drahtmaterial so dimensioniert sind, daß sie durch Wechselstrom bis 250 Volt und 50 Herz eine Heizleistung von maximal 25 Watt/m erbringen. Diese Heizdrähte können dann in Anständen von 15 bis 25 cm, vorzugsweise 20 cm mäanderförmig verlegt werden. Solche Heizdrähte erbringen dann Heizleistungen zwischen 50 und 120 W/m². Dies wird einerseits eine ausreichende Erwärmung, um die Austrocknung zu beschleunigen, vermeidet aber lokale Überhitzungen, die zur Schädigung des Estrichs führen könnten.

Für die Praxis kann es sinnvoll sein, Heizkabel mit unterschiedlicher Länge und unterschiedlicher, spezifischer Heizleistung pro Länge zur Verfügung zu stellen. Beispielsweise könnten Kabellängen mit 30 m, 65 m und 110 m zur Verfügung gestellt werden, die dann geeignet sind zur Beheizung von Flächen mit 4 bis 7 m², 8 bis 14 m² oder 20 bis 30 m². Daraus errechnen sich Heizleistungen von 110 bis 60 W/m². Jede dieser Heizdrahtschlaufen wird dann direkt mit der Stromzufuhr verbunden, d.h. mit den Polen einer üblichen Steckdose.

Selbstverständlich ist es möglich, auch mit anderen Kabellängen zu arbeiten. Nur wird es sich dann empfehlen, die optimale Heizleistung einzustellen durch vorschaltbare Widerstände oder regelbare Transformatoren. Auch dieser Aufwand ist relativ gering, zumal derartig vorschaltbare Widerstände und regelbare Transformatoren an anderen Baustellen erneut zum Einsatz zu bringen.

Die erfindungsgemäße Estrichkonstruktion unterscheidet sich von üblichen Fußbodenheizungen dadurch, daß die Heizdrähte verloren sind und später nicht wieder zum Einsatz kommen.
Dafür kann der für Fußbodenheizung notwendige zusätzliche Aufwand von Temperaturfühlern, Thermostatensteuerung und besonderen Sicherheitsmaßnahmen eingespart werden, wodurch die erfindungsgemäße Estrichkonstruktion dennoch sehr preiswert bleibt.

Erfindungsgemäß ist es möglich, die Austrocknungszeit von Wochen auf wenige Tage zu reduzieren, bzw. bei sehr dicken Estrichschichten von Monaten auf wenigen Wochen zu verkürzen.

Die erfindungsgemäße Konstruktion und das erfindungsgemäße Verfahren können dadurch noch effizienter gemacht werden, daß die Räume, in denen der Estrich verlegt worden ist, zwangsbelüftet werden. Diese Zwangsbelüftung kann besonders einfach durchgeführt werden mit einer Vorrichtung bestehend aus einfach montierbaren und demontierbaren Baustellentüren oder Baustellenfenstern mit einem in diesen Türen oder Fenstern eingebauten elektrisch angetriebenen Gebläse. Vorzugsweise wird das Gebläse so eingebaut, daß die feuchte Luft aus den Räumen von innen nach außen befördert wird.
Eine derartige Vorrichtung ist beispielsweise im DE-G 295 20 479 beschrieben.

Die erfindungsgemäße Estrichkonstruktion wird in den folgenden Beispielen näher erläutert.

### Beispiel 1

In einem Verkaufsraum von 40 m² Größe gemäß Anbildung 1 wird innerhalb einer Woche ein Fließestrich eingebaut und mit Teppichboden belegt.

Es wird ein schnell abbindender und schnell trocknender Fließestrich in einer Schichtdicke von 40 mm eingesetzt (Knauf FE 25).
- Gewählt werden: für 27 m² Kabel 1 mit 110 m Länge und 17,5 W/m mit einer Flächenleistung von 72 W/m² (4,1 m Kabel pro m²).
für 13 m² Kabel 2 mit 65 m Länge und 15 W/m mit einer Flächenleistung von 75 W/m² (5 m Kabel pro m²).

Der Estrich ist belegereif bei einer Restfeuchte von 1 %.
Die Belegereife wird bei dem Estrich ohne Heizkabel nach ca. 13 Tagen erreicht.
Die Belegereife wird bei dem Estrich mit Heizkabel nach ca. 6 Tagen erreicht.

### Beispiel 2

In einer Lagerhalle von 75 m² Größe gemäß Anbildung 2 wird ein Fließestrich eingebaut, der durch Gabelstapler belastet werden soll.

Es wird ein normal abbindender und normal trocknender Fließestrich in einer Schichtdicke von 80 mm eingesetzt (Knauf FE 50).
- Gewählt werden: für 75 m² drei Kabel 1 mit 110 m Länge und 17,5 W/m mit einer Flächenleistung von 77 W/m² (4,4 m Kabel pro m²).

Der Estrich ist belegereif bei einer Restfeuchte von 0,5 %.
Die Belegereife wird bei dem Estrich ohne Heizkabel nach ca. 6 Monaten erreicht.
Die Belegereife wird bei dem Estrich mit Heizkabel nach ca. 1 Monat erreicht.

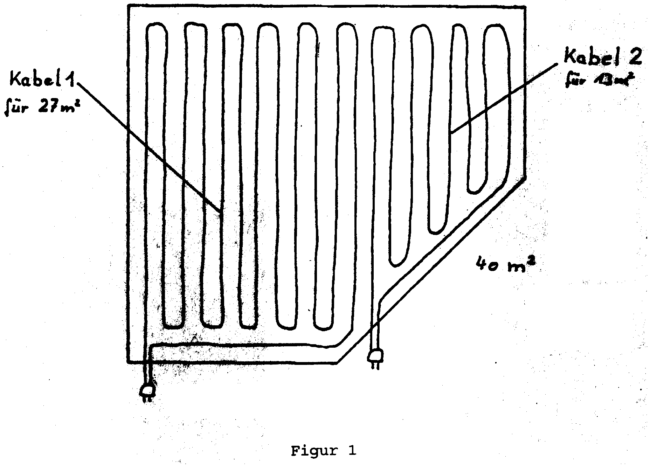

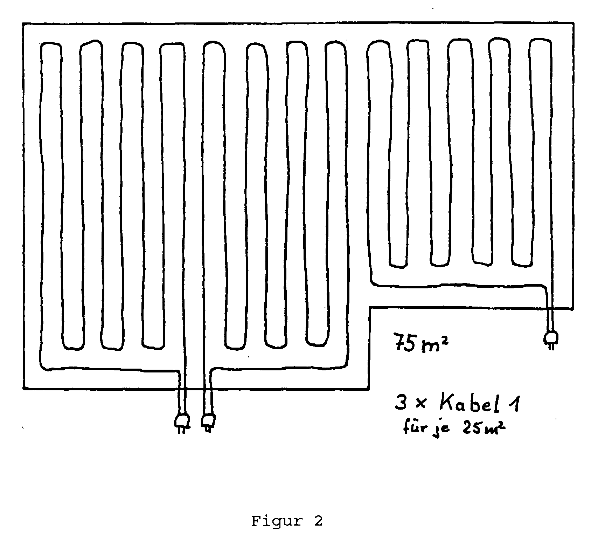

## Patentansprüche

1. Estrichkonstruktion mit verkürzter Austrocknungszeit, dadurch gekennzeichnet, daß sie an ihrer Unterseite eine oder mehrere Schlaufen aus in annähernd gleichem Anstand voneinander verlegten, elektrisch isolierten Heizdrähten aufweist, die nur während der Austrocknung mit einer Stromzufuhr verbunden sind.

2. Estrichkonstruktion gemäß Anspruch 1, dadurch gekennzeichnet, daß die Heizdrähte bezüglich Länge, Drahtdurchmesser und Drahtmaterial so dimensioniert sind, daß sie durch Wechselstrom bis 250 Volt und 50 Herz eine Heizleistung von maximal 25 Watt/m erbringen.

3. Estrichkonstruktion gemäß Anspruch 1 oder 2, dadurch gekennzeichnet, daß die Anstände zwischen je zwei Heizdrähten im Bereich von 15 bis 25 cm liegen.

4. Estrichkonstruktion gemäß einem der Ansprüche 1 bis 3, dadurch gekennzeichnet, daß die Heizleistung der Heizdrähte im Bereich von 50 bis 120 W/m² liegt.

5. Estrichkonstruktion gemäß einem der Ansprüche 1 bis 4, dadurch gekennzeichnet, daß die Heizdrähte aus mehreren verdrillten Einzeladern bestehen aus Metallegierungen gemäß DIN 57 253 und VDE 0253.

6. Estrichkonstruktion gemäß einem der Ansprüche 1 bis 5, dadurch gekennzeichnet, daß die Isolierung alkalibeständig ist.

7. Verfahren zur Herstellung einer Estrichkonstruktion gemäß einem der Ansprüche 1 bis 6, dadurch gekennzeichnet, daß zunächst auf dem Untergrund für einen Estrich ein oder mehrere Heizdrähte in annähernd gleichem Abstand als Schlaufen verlegt und gegebenenfalls fixiert werden, dann der Estrich aufgebracht wird, dann die Enden jeder einzelnen Drahtschlaufe mit der Stromzufuhr verbunden werden und nach der Austrocknung die Stromzufuhr endgültig unterbrochen wird.

8. Verfahren gemäß Anspruch 7, dadurch gekennzeichnet, daß die Schlaufen mäanderförmig im Abstand von 15 bis 25 cm verlegt werden.

9. Verfahren gemäß Anspruch 7 oder 8, dadurch gekennzeichnet, daß Heizkabel mit unterschiedlicher Länge und unterschiedlicher Heizleistung/m verwendet werden um unterschiedlich große Flächenabschnitte des Estrichs zu beheizen.

10. Verfahren gemäß einem der Ansprüche 7 bis 9, dadurch gekennzeichnet, daß die Heizleistung durch vorschaltbare Widerstände oder regelbare Transformatoren reduziert wird.

11. Verfahren gemäß einem der Ansprüche 7 bis 10, dadurch gekennzeichnet, daß die Räume während der Austrocknungszeit zwangsbelüftet werden.
